# EUROPEAN PATENT APPLICATION

(11) **EP 2 525 243 A1**
(43) Date of publication of application: **21.11.2012**
(21) Application number: 11166894.3
(22) Date of filing: 20.05.2011
(51) Int. Cl.: G01W 1/08

(54) **Method to collect meteorological data**

(71) Applicant: SIEMENS AKTIENGESELLSCHAFT, 80333 München (DE)
(72) Inventor: Stege, Jason, 7330, Brande (DK); Stiesdal, Henrik, 5000, Odense C (DK)

(57) **Abstract**

The invention relates to a method to collect meteorological data, which are used to influence the operation of at least one wind turbine. An unmanned automated vehicle is directed within a predefined ambient air-volume, which is assigned to the at least one wind turbine. The unmanned automated vehicle generates meteorological data by an instrument, while the instrument is carried by the unmanned automated vehicle. The data are related to the volume, which is assigned to the at least one wind turbine.

## Description

The invention relates to a method to collect meteorological data, like wind data, which are used to influence the operation of at least one wind turbine.

Typically a number of instruments are installed at a so called meteorological mast. These instruments provide data, especially wind data, which are used to control or influence the operation of a number of wind turbines or even of a single wind turbine.

The mounting-height of a certain instrument and the position of the meteorological mast are fixed in view to the dedicated wind turbine or wind turbines. Thus only a small volume of the ambient air can be used to generate reliable meteorological data needed.

By increasing the number of meteorological masts even the costs for their establishment and for their operation increases.

Additionally a quite expensive maintenance work needs to be done to maintain the reliable operation of the high-sensitive instruments.

It is the aim of the invention to provide an improved and cheap method to collect meteorological data, which can be used to control or to influence the operation of at least one wind turbine.

According to the invention a so called "unmanned automated vehicle, UAV" is used for this purpose. The UAV is directed or guided within a predefined ambient air-volume. The UAV carries at least one instrument, which is prepared to measure or generate meteorological data related to the assigned volume.

Preferably the UAV is guided within the predefined ambient air-volume remote-controlled. A technician might control the flight-path of the UAV for example. Thus a specific meteorological situation (like an approaching bad weather situation) can be addressed directly and in real time.

Preferably the UAV is guided within the predefined ambient air-volume in an autonomous manner. Thus the UAV takes of, patrols along a predetermined flight path for the measurement and lands automatically afterwards for example. A map-based and/or a GPS-based flight-software may be used to control the flight-path of the UAV for example. Thus the meteorological data can be gathered regularly at predetermined points of to-ime. For example the weather conditions may be measured every 30 minutes. Additionally there is no need for service personal while the data are gathered.

Preferably the meteorological data are transferred wireless to a data-system for interpretation and evaluation. Thus the data are saved even if the UAV needs to be directed into quite bad weather conditions.

Preferably the data-system is arranged close to or within a control-terminal, which is used to control the operation of the wind turbine or wind turbines. Thus operational time is saved as all components, which are needed to control the wind turbine, are arranged centralized.

Preferably all gathered data are transferred in real time towards the data system. Thus weight is reduced asides the UAV as there is no need for a database on board of the UAV to store the data.

Preferably the gathered data are documented by an automated-self-documentation-system, preferably using an appropriate computer programme. Thus the gathered data and the resulting control commands for the wind turbine(s) can be compared with the specific weather conditions and the resulting output power of the wind turbine(s) afterwards. Thus the control commands can be optimized in view to the set of data gathered.

Preferably meteorological data behind and/or in front of a wind turbine or wind turbines are gathered. Thus wake-areas of wind turbine plants or of a single wind turbine can be detected and can be evaluated in view to their size and/or their position.

Preferably the meteorological data are mapped with another data available. Thus an optimized set of meteorological data is obtained.

For example the UAV is directed to analyze a first ambient-air-volume, which is in front of a wind turbine. Next the UAV is directed to analyze a second ambient-air-volume, which is behind a wind turbine. The UAV gathers the meteorological data of both volumes. Additionally the UAV gathers additional data in view to its flight path, e.g. its attitude and its acceleration at specific positions. All data are combined and matched to achieve an optimized set of meteorological data. Thus wake and turbulences at predetermined positions in view to the wind turbine can be measured.

Preferably the UAV carries at least components of the instrument or the whole instrument, being used to generate the data needed. If only components of the instrument are carried by the UAV the needed load capacity of the UAV can be reduced. Thus the size of the UAV can be reduced to spare costs.

Preferably the instrument is prepared and used to measure the air-temperature, the UAV-position, the wind velocity, the humidity of the air and/or electrical fields along the flight path, ..., etc. Thus a wide range of meteorological data and parameters are obtained to provide an optimized data set.

Appropriate instruments like sensors are available for this purpose. Most of them are available as micro sensors. Thus the UAV can be equipped with them quite easy while the size of the UAV needed is kept as small as possible.

The sensors are already well introduced into the market, even in the consumer market. Thus they are quite cheap, small and they are even lightweight. They can be carried by an appropriate chosen UAV without problems.

The software and the electronics, which are used to control the UAV, can be modified quite easily. This allows the direction of a number of UAV simultaneously. Thus a formation of multiple flying UAV is achieved quite easily.

The UAV-formation allows an increased resolution of the data, as the resolution of the data is determined by the number of UAV and by their flight speed.

The data are extrapolated in view to a specific point of time preferably. Thus a three-dimensional wind-model can be obtained, preferably of the wind-situation in front of a dedicated wind turbine and of the wake-situation behind the wind turbine.

For example twenty UAV fly in a vertical formation with a vertical spacing of 10 meters between two adjacent UAV. They are directed to fly back and forth and perpendicular to the wind-direction in front of the wind turbine(s) and behind the wind turbine(s).

Viewed from above the UAV-formation follows a zigzag line, the meteorological data are collected along this line. The data are combined with vertical data (i.e. the individual heights) of the UAV.

The combined data are extrapolated to obtain the 3D-model of the wind, which flows towards and through a wind turbine park for example.

Preferably the data are saved into a central database automatically and according to a set of predefined rules.

The meteorological data are used to create appropriate control-commands for the wind turbine(s), i.e. for their pitching or their yawing.

The method invented is advantageous in view to the so called "wake modeling" of wind turbine parks. The data gained by the method invented are accurate and even three-dimensional as described above. Thus the wake-modeling is more accurate than known before. Thus an increased production of a wind turbine park is gained.

The gathering and the use of the "additional data" requires no expensive additional instrumentation. Thus the gained set of data can be improved tremendously nearly without additional costs.

The invention is shown in more detail by help of figures. The figures show preferred configurations and do not limit the scope of the invention. They even do not limit the scope of the claims.

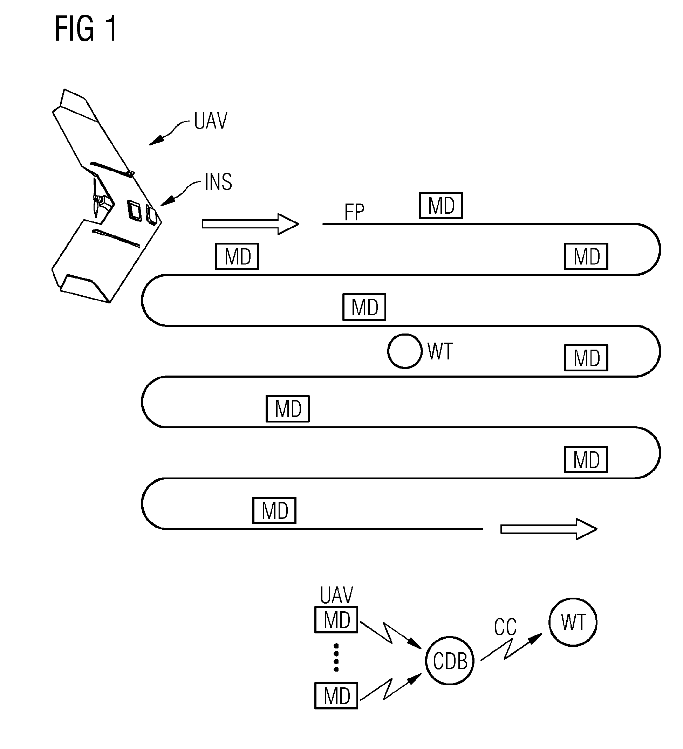

FIG 1 shows the principle idea of the method invented, and
FIG 2 shows two possible versions of UAV, which can be used for the method invented.

An Unmanned Aerial Vehicle UAV is guided in front and behind of a wind turbine WT along a predetermined flight path FP.

The UAV carries an instrument INS to gather meteorological data MD.

The data MD are transferred wireless to a central database CDB to be stored there. The database CDB is preferably arranged remote from the unmanned aerial vehicle UAV. The data MD are used to generate a control command CC for the wind turbine.

Any appropriate vehicle like a plane or a helicopter may be used as UAV. Right now there are several companies, which produce this kind of UAV. A wide range of them are offered via the internet.

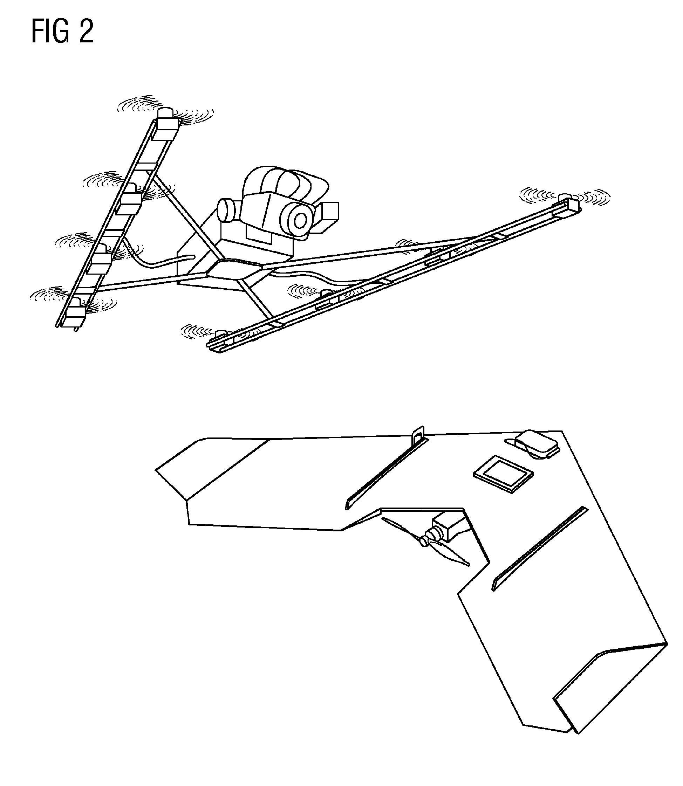

FIG 2 shows two possible UAV to be used according to the method invented. One UAV is named "Falcon-PARS", which is a kind of helicopter. This UAV is offered by the company "ISTS Americas Corporation" for example.

The other UAV is a plane, which is offered by the company SENSEFLY, Switzerland, for example.

## Claims

1. Method to collect meteorological data, which are used to influence the operation of at least one wind turbine,
- where an unmanned automated vehicle is directed within a predefined ambient air-volume, which is assigned to the at least one wind turbine,
- where the unmanned automated vehicle generates meteorological data by an instrument, while the instrument is carried by the unmanned automated vehicle, and
- where the data are related to the volume, which is assigned to the at least one wind turbine.

2. Method according to claim 1, where the unmanned automated vehicle is remote controlled or where the unmanned automated vehicle is guided within the predefined ambient air-volume in an autonomous manner.

3. Method according to claim 2 or to claim 1, where the unmanned automated vehicle gathers the meteorological data in relation to the position of the unmanned automated vehicle.

4. Method according to claim 3, where the unmanned automated vehicle uses GPS-signals to determine the position of the unmanned automated vehicle.

5. Method according to one of the preceding claims, where the gathered generated meteorological data are transferred wireless to a data-system for interpretation and evaluation.

6. Method according to one of the preceding claims, where a control-terminal is used to control the operation of the at least one wind turbine based on the meteorological data.

7. Method according to claim 5 or to claim 6, where the gathered data are transferred in real time towards the data system or towards the control-terminal.

8. Method according to one of the preceding claims, where the gathered meteorological data are stored for documentation and/or for their optimisation.

9. Method according to one of the preceding claims, where the meteorological data behind and/or in front of the at least one wind turbine are gathered for the detection of wake and for the detection of turbulences in view to the at least one wind turbine.

10. Method according to one of the preceding claims,
- where the meteorological data are mapped with additional data to obtain an optimized set of meteorological data, and
- where the additional data relates to the flight path of the unmanned automated vehicle, to the air-temperature, to the wind velocity, to the humidity of the air and/or to electrical field measured along the flight path.

11. Method according to one of the preceding claims, where at least components of the instrument are carried by the unmanned automated vehicle.

12. Method according to one of the preceding claims, where a number of unmanned automated vehicles are guided as formation to generate the meteorological data.

13. Method according to one of the preceding claims, where the meteorological data are used to obtain a three-dimensional wind-model in view to the at least one wind turbine.

14. Method according to one of the preceding claims, where the meteorological data are used to generate control-commands to control and/or to influence the operation of the at least one wind turbine.
